## Europäisches Patentamt
## European Patent Office
## Office européen des brevets

(19)

(11) Numéro de publication: **0 070 223**
**B1**

(12) ## FASCICULE DE BREVET EUROPEEN

(45) Date de publication du fascicule du brevet:
**14.11.84**

(51) Int. Cl.³: **H 01 R 25/16**

(21) Numéro de dépôt: **82401244.7**

(22) Date de dépôt: **02.07.82**

(54) Dispositif de connexion électrique multiple.

(30) Priorité: **15.07.81 FR 8113786**

(43) Date de publication de la demande:
**19.01.83 Bulletin 83/3**

(45) Mention de la délivrance du brevet:
**14.11.84 Bulletin 84/46**

(84) Etats contractants désignés:
**CH DE GB LI NL**

(56) Documents cités:
**FR - A - 1 082 307**
**FR - A - 1 166 395**
**US - A - 1 955 287**
**US - A - 3 553 534**

(73) Titulaire: **TRAVAUX INDUSTRIELS POUR L'ELECTRICITE "TRINDEL", 44, rue de Lisbonne, F-75008 Paris (FR)**

(72) Inventeur: **Maury, Georges, 37 chemin des Hauts-Graviers, F-91370 Verrieres le Buisson (FR)**
Inventeur: **Sorg, Gilbert, 3 rue de la Forêt, F-67380 Lingolsheim (FR)**

(74) Mandataire: **Bouju, André, 38 Avenue de la Grande Armée, F-75017 Paris (FR)**

# Description

La présente invention concerne un dispositif de connexion électrique multiple utilisable dans une gamme de tensions allant jusqu'à 660 V et dans une gamme d'intensités allant jusqu'à 80 A.

L'invention vise en particulier l'interconnexion entre des barres d'alimentation reliées au réseau et des tiroirs de réglage et de commande constituant des circuits extérieurs. Les barres sont en général au nombre de quatre (trois phases et un neutre) et les tiroirs peuvent être en nombre quelconque. Chaque tiroir comporte des prises d'entrée de courant reliées aux barres et des prises de sortie reliées aux divers réseaux consommateurs.

Il est connu de munir les tiroirs de prises multibroches qui se connectent à des planches à bornes raccordées par fils à une prise générale reliée aux barres d'alimentation. Un tel système présente un certain nombre d'inconvénients.

D'une part, les connexions par fils sont longues à réaliser et peuvent donner lieu à des erreurs et à des incidents, notamment dans le maniement des vis des planches à bornes. Les réalisations sont faites à l'unité et ne peuvent bénéficier de l'avantage économique de la fabrication en série. En particulier, le tableau de branchement est réalisé en fonction d'un certain module de tiroir auquel il est définitivement affecté. Enfin, toute modification des circuits exige une coupure générale de l'alimentation.

La présente invention vise à réaliser un dispositif de connexion d'une mise en œuvre simple et rapide, réduisant notamment l'emploi de câbles, évitant les raccordements par planches à bornes et permettant l'emploi de tiroirs de divers modules.

Suivant l'invention, le dispositif de connexion électrique multiple entre des barres d'alimentation et un certain nombre de circuits extérieurs comprend des prises de connexion auxdites barres et des prises de connexion auxdits circuits. Il est caractérisé en ce qu'il comprend autant de lignes de distribution qu'il y a de barres, chaque ligne étant connectée à une barre et munie d'autant de prises de connexion aux circuits qu'il y a de circuits à connecter.

La prise sur une ligne de distribution correspond à la prise sur une barre d'alimentation, mais les lignes sont munies de prises en attente qui permettent la connexion immédiate de circuits extérieurs dont le nombre est prédéterminé par construction. On évite ainsi d'avoir à réaliser des connexions par câble à la demande.

Suivant une réalisation préférée de l'invention, le dispositif comprend un boîtier isolant dans lequel sont montées les lignes de distribution, et chaque ligne est munie d'une pince pour serrer une barre d'alimentation correspondante.

Cette caractéristique permet une déconnexion immmédiate et facile de l'ensemble du dispositif pour réparation éventuelle, sans avoir à couper le courant dans les barres et sans manœuvres longues et délicates sur des planches à bornes.

Suivant une réalisation avantageuse de l'invention, chaque ligne de distribution comporte une série de premières pinces pour recevoir chacune une fiche d'un circuit extérieur, de sorte que ce circuit, muni d'une prise multibroche, est connectable immédiatement. En outre, le dispositif comprend avantageusement une série de secondes pinces pour recevoir chacune une fiche d'un circuit extérieur, chaque pince étant reliée à un conducteur aboutissant à une sortie du boîtier.

Cette double série de prises permet d'utiliser le dispositif pour connecter un tiroir de réglage comportant des prises d'entrée et des prises de sortie du courant.

De façon commode, les premières pinces et les secondes pinces destinées au branchement d'un circuit extérieur donné sont alignées suivant deux files respectives transversalement aux lignes de distribution et parallèlement aux barres d'alimentation, et les deux files de pinces relatives à un circuit extérieur donné sont écartées l'une de l'autre d'un pas constant.

Pour éviter toute erreur de branchement, les deux files de pinces relatives à un circuit extérieur donné sont décalées l'une par rapport à l'autre en profondeur.

Suivant une réalisation perfectionnée de l'invention, les groupes de deux files relatives chacun à un circuit extérieur donné sont espacés les uns des autres d'un pas variable, ce qui permet de connecter des tiroirs de modules différents.

Suivant une réalisation économique de l'invention, le boîtier est composé de pièces empilées sensiblement identiques, dont le nombre est égal au nombre de pinces de chaque série.

D'autres particularités et avantages de l'invention ressortiront encore de la description détaillée qui va suivre.

Aux dessins annexés, donnés à titre d'exemples non limitatifs:

la fig. 1 est une vue en perspective d'un dispositif de connexion conforme à l'invention;

la fig. 2 est une vue en coupe suivant II-II de la fig. 1;

la fig. 3 est une vue en coupe suivant III-III de la fig. 1;

la fig. 4 est une vue en coupe suivant IV-IV des fig. 2 et 3;

la fig. 5 est une vue en perspective d'une ligne de distribution supposée sortie du boîtier;

la fig. 6 est une vue en perspective éclatée du boîtier;

la fig. 7 est une vue schématique du montage de deux tiroirs sur un dispositif conforme à l'invention, avec représentation de connexion sur une phase, et

la fig. 8 est une vue analogue, montrant le montage de trois tiroirs d'un autre module, avec représentation de connexion sur deux phases.

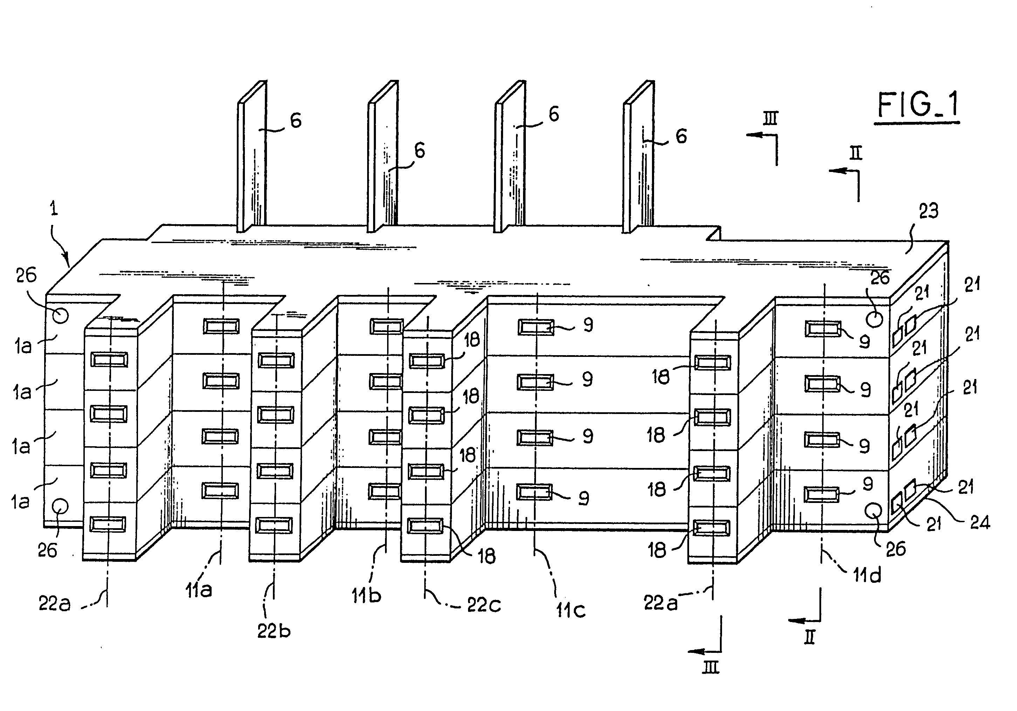

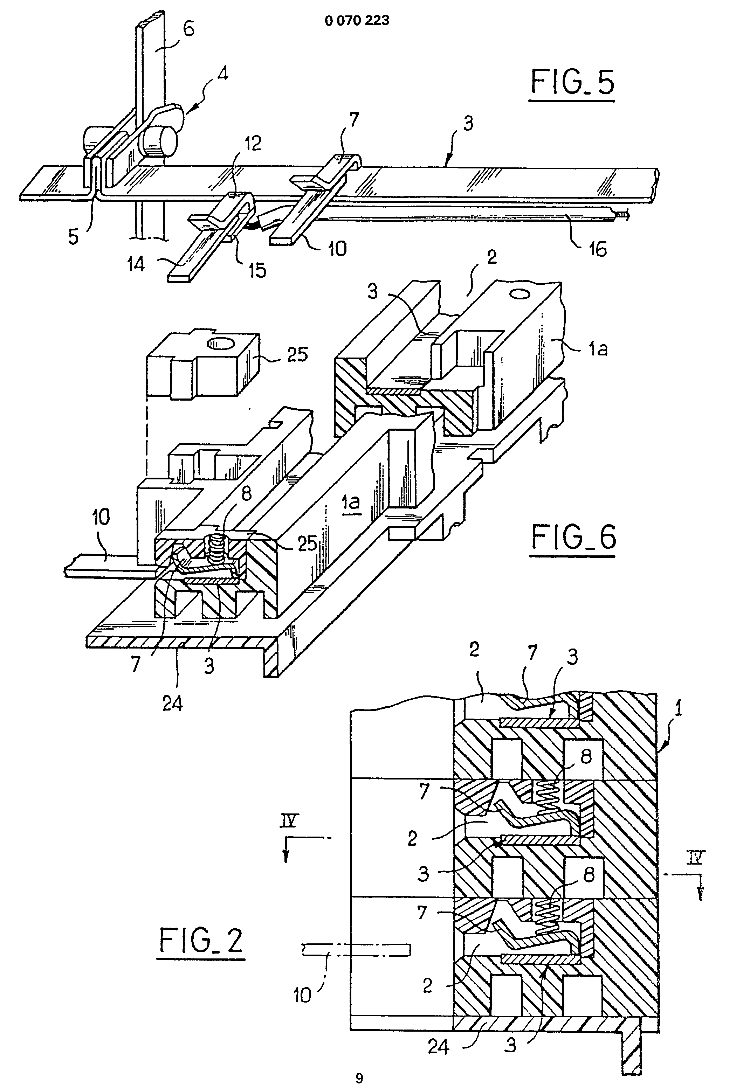

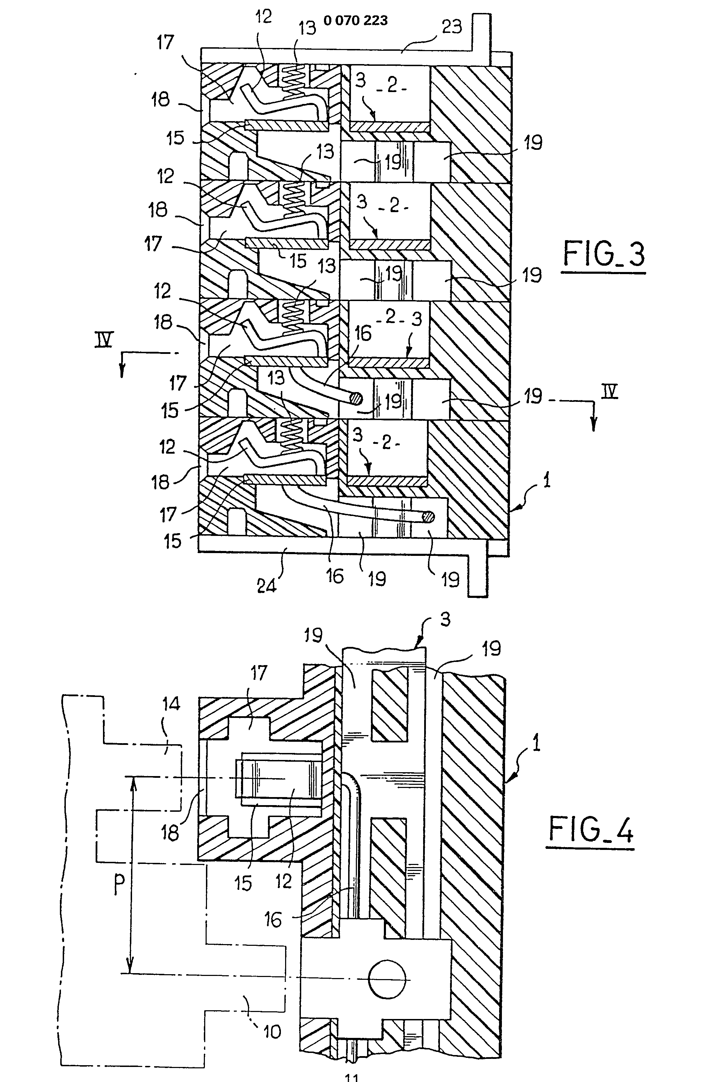

En référence aux fig. 1 à 5, le dispositif de connexion (ou connecteur) comprend un boîtier 1 dans lequel sont ménagés quatre canaux 2 superposés contenant chacun une barre plate 3 formant ligne de distribution. Chaque ligne est munie d'une pince 4 qui enserre un repli 5 de la ligne (fig. 5) et qui s'ouvre à l'extérieur du boîtier (à l'arrière en référence à la fig. 1) pour pincer une barre d'alimentation 6 reliée au réseau. Dans l'exemple décrit, on considère une alimentation triphasée avec neutre, et il existe quatre barres 6 reliées chacune à une ligne 3.

Chaque ligne 3 est munie d'un certain nombre de premières pinces 7, maintenues appliquées sur la ligne par des ressorts 8, prévues pour recevoir chacune une fiche 10 (fig. 5 et 6) d'un circuit extérieur à connecter, cette fiche étant introduite par un orifice frontal 9. Les premières pinces 7 relatives à une même prise de circuit sont fixées suivant une série alignée verticalement, transversalement aux lignes 3 et parallèlement aux barres 6, chacune étant fixée sur une ligne 3 différente. Les orifices 9 sont donc alignés verticalement (fig. 1) pour la connexion d'une prise multifiche dont les fiches sont présentées suivant un alignement vertical.

Les séries de premières pinces 7 sont réparties horizontalement suivant la longueur des lignes 3. Dans l'exemple décrit, il est prévu quatre séries 11a, 11b, 11c, 11d.

Une série de secondes pinces 12 (fig. 5) sont alignées suivant des files verticales, transversalement aux lignes 3 et parallèlement aux barres 6, pour serrer chacune, grâce à un ressort 13, une fiche 14 d'un circuit extérieur contre une plaquette 15 reliée à un câble 16. Les pinces 12 sont logées dans des cavités 17 qui s'ouvrent sur la face avant du boîtier 1 par des orifices 18 permettant l'entrée des fiches 14.

Les câbles 16 sont logés dans des canaux 19 s'étendant parallèlement aux lignes 3 et débouchant latéralement du boîtier 1 par des sorties 21 (fig. 1).

Dans l'exemple décrit, les files 22a, 22b, 22c, 22d de secondes pinces sont en nombre égal aux files de premières pinces.

Le pas p (fig. 4) entre une file de premières pinces et une file de secondes pinces est constant, ce qui permet de raccorder sur ces deux séries une prise à quatre fiches d'un circuit extérieur, le courant entrant dans ce circuit à partir des barres 6 et en sortant par les câbles 16.

D'autre part, chaque file d'orifices 18 est décalée en profondeur par rapport à la file d'orifices 9 voisine, ce qui interdit un branchement défectueux.

Le boîtier 1 est de structure modulaire, étant constitué d'éléments 1a empilés en nombre égal au nombre de pinces de chaque file. Une semelle supérieure 23 (fig. 3) ferme le canal 2 supérieur et sert d'appui aux ressorts 13 supérieurs, et une semelle inférieure 24 ferme les canaux 19 inférieurs. Les éléments 1a sont identiques entre eux, ce qui conduit à une économie de fabrication, tout en permettant de réaliser économiquement des connecteurs pour un nombre de fiches et de barres autre que quatre.

Pour faciliter le montage des pinces, chaque logement de pince 17, ou formant partie du canal 2, est ouvert par-dessus, permettant le montage de la pince, puis fermé ensuite par une pièce 25 formant couvercle (fig. 6).

Enfin, des trous 26 percés dans le boîtier 1 permettent sa fixation sur un châssis fixe.

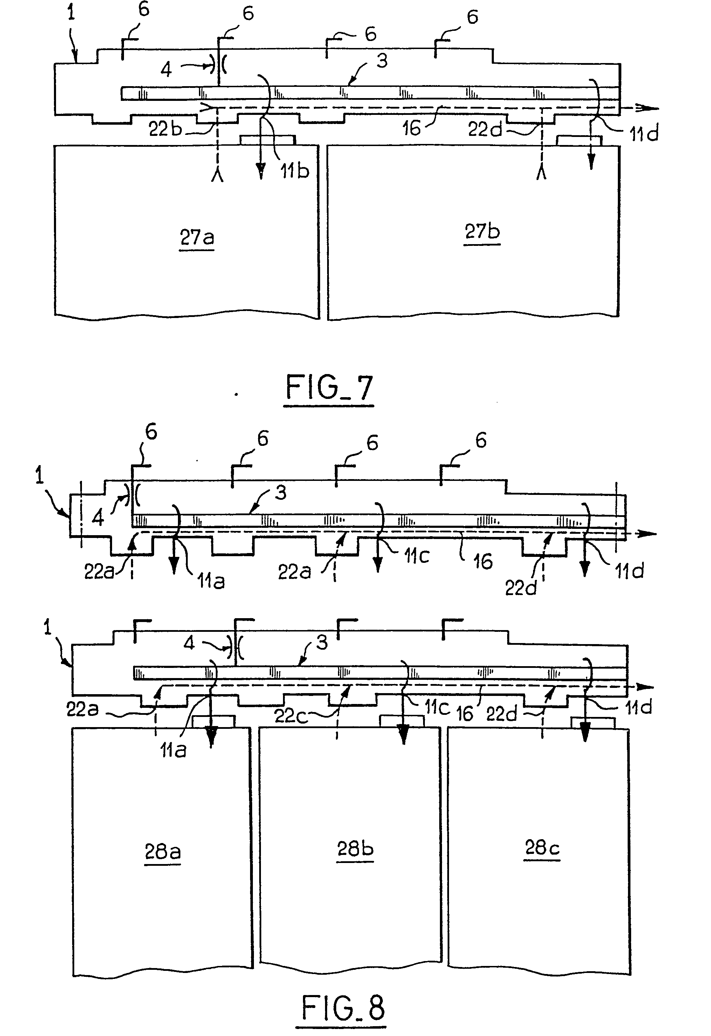

En vue de réserver la possibilité de connexion de tiroirs de module différent, les groupes de deux files telles que 11a et 22a, ou 11b et 22b, relatives à un circuit extérieur donné, sont espacés les uns des autres d'un pas variable. Les fig. 7 et 8 illustrent cette caractéristique.

Sur la fig. 7, on a représenté schématiquement le boîtier 1 du connecteur avec la pince 7 correspondant à la seconde barre 6 et la ligne de distribution 3 correspondante. On a également représenté le câble 16 situé au même niveau que la ligne 3, ce niveau étant celui d'un élément 1a donné.

Un tiroir 27a d'un certain module est enfiché sur les files 11b et 22b pour recevoir du courant de la première file et le restituer par la seconde après traitement.

Un autre tiroir 27b est enfiché, de la même manière, sur les files 11d et 22d. Les files 11a, 22a, 11c et 22c restent inutilisées.

Sur la fig. 8, on a représenté deux niveaux du boîtier 1, correspondant respectivement aux deux premières barres d'alimentation et aux deux lignes de distribution 3 correspondantes. Les tiroirs connectés sont de plus petit module que les tiroirs précédents et l'on peut connecter trois tiroirs 28a, 28b, 28c, en utilisant cette fois les files 11a, 22a, 11c, 22c, 11d, 22d. Les files 11b et 22b restent inutilisées.

Les connecteurs peuvent en outre être superposés les uns au-dessus des autres pour connecter des rangées superposées de deux ou de trois tiroirs.

La connexion entre les barres d'alimentation 6 et les tiroirs s'effectue sans aucun câble et, par conséquent, sans avoir à réaliser des connexions de tels câbles sur des planches à bornes.

En cas d'avarie quelconque dans les connecteurs, il suffit, après démontage des moyens de fixation, de les débrancher des barres 6, ce qui s'effectue immédiatement par retrait des pinces 4. La réparation peut alors s'effectuer à loisir en atelier. Le retrait d'une connexion ne nécessite aucune coupure du courant dans les barres 6. Pendant la durée de la réparation, le connecteur retiré peut être remplacé par un connecteur identique.

L'invention permet donc de réaliser des connexions de façon très rapide et en toute sécurité, avec un matériel robuste se prêtant à une fabrication en série.

## Revendications

1. Dispositif de connexion électrique multiple entre des barres d'alimentation (6) et un certain nombre de circuits extérieurs (27a, 27b; 28a, 28b, 28c) comprenant des prises de connexion auxdites barres et des prises de connexion auxdits circuits, caractérisé en ce qu'il comprend autant de lignes de distribution (3) qu'il y a de barres (6), chaque ligne étant connectée à une barre et munie d'autant de prises de connexion (7) aux circuits qu'il y a de circuits à connecter.

2. Dispositif conforme à la revendication 1, caractérisé en ce qu'il comprend un boîtier isolant (1) dans lequel sont montées les lignes de distribution (3), chaque ligne étant munie d'une pince (4) pour serrer une barre d'alimentation (6) correspondante.

3. Dispositif conforme à l'une des revendications 1 ou 2, caractérisé en ce que chaque ligne de distribution (3) comporte une série de premières pinces (7) pour recevoir chacune une fiche (10) d'un circuit extérieur.

4. Dispositif conforme à la revendication 3, caractérisé en ce qu'il comprend une série de secondes pinces (12) pour recevoir chacune une fiche (14) d'un circuit extérieur, chaque pince (12) étant reliée à un conducteur (16) aboutissant à une sortie (21) du boîtier (1).

5. Dispositif conforme à la revendication 4, caractérisé en ce que les premières pinces (7) et les secondes pinces (12) destinées au branchement d'un circuit extérieur donné sont alignées suivant deux files respectives (11a, 22a; 11b, 22b; 11c, 22c; 11a, 22a), transversalement aux lignes de distribution (3) et parallèlement aux barres d'alimentation (6).

6. Dispositif conforme à la revendication 5, caractérisé en ce que les deux files de pinces relatives à un circuit extérieur donné sont écartées l'une de l'autre d'un pas constant (p).

7. Dispositif conforme à l'une des revendications 5 ou 6, caractérisé en ce que les deux files de pinces relatives à un circuit extérieur donné sont décalées l'une par rapport à l'autre en profondeur.

8. Dispositif conforme à l'une des revendications 5 à 7, caractérisé en ce que les groupes de deux files relatives chacune à un circuit extérieur donné sont espacés les uns des autres d'un pas variable.

9. Dispositif conforme à l'une des revendications 5 à 8, caractérisé en ce que le boîtier (1) est composé de pièces (1a) empilées sensiblement identiques, dont le nombre est égal au nombre de pinces (7, 12) de chaque file.

10. Dispositif conforme à l'une des revendications 2 à 9, caractérisé en ce que le boîtier (1) comprend des moyens (26) de fixation sur un châssis fixe.

## Claims

1. Device providing a multiple electric connection between supply bars (6) and a certain number of external circuits (27a, 27b; 28a, 28b, 28c) comprising connectors for connecting to said bars and connectors for connecting to said circuits, characterized in that it comprises a number of distribution lines (3) corresponding to the number of bars (6), each line being connected to one bar and provided with a number of circuit connectors (7) corresponding in number to the circuits to be connected.

2. Device in accordance with Claim 1, characterized in that it comprises an insulating casing (1) in which are mounted the distribution lines (3), each line being provided with a clip (4) for clamping a corresponding supply bar (6).

3. Device in accordance with either of Claims 1 or 2, characterized in that each distribution line (3) comprises a series of first clips (7) for receiving in each case a plug-in terminal (10) of an external circuit.

4. Device in accordance with Claim 3, characterized in that it comprises a series of second clips (12) for receiving in each case a plug-in terminal (14) of an external circuit, each clip (12) being connected to a conductor (16) which extends to an outlet (21) of the casing (1).

5. Device in accordance with Claim 4, characterized in that the first clips (7) and the second clips (12), which are intended to connect a given external circuit, are aligned in two respective rows (11a, 22a; 11b, 22b; 11c, 22c; 11a, 22a) in a direction transverse to the distribution lines (3) and parallel to the supply bars (6).

6. Device in accordance with Claim 5, characterized in that the two rows of clips related to a given external circuit are spaced with a constant pitch (p).

7. Device in accordance with either of Claims 5 or 6, characterized in that the two rows of clips related to a given external circuit are displaced in depth with respect to each other.

8. Device in accordance with one of Claims 5 to 7, characterized in that the groups of two rows each related to a given external circuit are spaced with a variable pitch.

9. Device in accordance with one of Claims 5 to 8, characterized in that the casing (1) is composed of substantially identical stacked components (1a) equal in number to the number of clips (7, 12) of each row.

10. Device in accordance with one of Claims 2 to 9, characterized in that the casing (1) comprises means (26) for fixing on a stationary frame.

## Patentansprüche

1. Vorrichtung zur elektrischen Mehrfachverbindung zwischen Speiseschienen (6) und einer bestimmten Anzahl von äusseren Kreisen (27a, 27b; 28a, 28b, 28c), mit Anschlussabgriffen an den Schienen und Anschlussabgriffen an den Kreisen, dadurch gekennzeichnet, dass sie ebenso viele Verteilungsleitungen (3) umfasst, wie Schienen (6) vorhanden sind, wobei jede Leitung an eine Schiene angeschlossen ist und mit ebenso vielen Anschlussabgriffen (7) an den Kreisen versehen ist, wie anzuschliessende Kreise vorhanden sind.

2. Vorrichtung nach Anspruch 1, dadurch gekennzeichnet, dass sie ein isolierendes Gehäuse (1) umfasst, in dem die Verteilungsleitungen (3) montiert sind, wobei jede Leitung mit einer Klemme (4) versehen ist, um eine entsprechende Speiseschiene (6) einzuspannen.

3. Vorrichtung nach einem der beiden Ansprüche 1 oder 2, dadurch gekennzeichnet, dass jede Verteilungsleitung (3) eine Reihe von ersten Klemmen (7) umfasst, um jeweils einen Stecker (10) eines äusseren Kreises aufzunehmen.

4. Vorrichtung nach Anspruch 3, dadurch gekennzeichnet, dass sie eine Reihe von zweiten Klemmen (12) zur Aufnahme von jeweils einem Stecker (14) eines äusseren Kreises umfasst, wobei jede Klemme (12) mit einem Leiter (16) verbunden ist, der an einem Ausgang (21) des Gehäuses (1) endet.

5. Vorrichtung nach Anspruch 4, dadurch gekennzeichnet, dass die ersten Klemmen (7) und die zweiten Klemmen (12), die zum Anschliessen eines äusseren Kreises bestimmt sind, in zwei Reihen (11a, 22a; 11b, 22b; 11c, 22c; 11a, 22a) transversal zu den Verteilungsleitungen (3) und parallel zu den Speiseschienen (6) ausgerichtet sind.

6. Vorrichtung nach Anspruch 5, dadurch gekennzeichnet, dass die beiden Reihen von Klemmen, die zu einem gegebenen äusseren Kreis gehören, voneinander um eine konstante Schrittweite (p) beabstandet sind.

7. Vorrichtung nach einem der Ansprüche 5 oder 6, dadurch gekennzeichnet, dass die beiden Reihen von Klemmen, die zu einem gegebenen äusseren Kreis gehören, gegeneinander in der Tiefe versetzt sind.

8. Vorrichtung nach einem der Ansprüche 5 bis 7, dadurch gekennzeichnet, dass die Gruppen von zwei Reihen, die jeweils zu einem gegebenen äusseren Kreis gehören, voneinander durch eine variable Schrittweite beabstandet sind.

9. Vorrichtung nach einem der Ansprüche 5 bis 8, dadurch gekennzeichnet, dass das Gehäuse (1) aus im wesentlichen einander gleichen, aufeinandergestapelten Teilen (a) zusammengesetzt ist, deren Anzahl gleich der Anzahl von Klemmen (7, 12) jeder Reihe ist.

10. Vorrichtung nach einem der Ansprüche 2 bis 9, dadurch gekennzeichnet, dass das Gehäuse (1) Mittel (26) zur Befestigung an einem feststehenden Rahmen umfasst.

FIG_1

0 070 223

FIG_5

FIG_6

FIG_2

0 070 223

FIG_3

FIG_4

FIG_7

FIG_8

13